# FASCICULE DE BREVET EUROPEEN

(11) **EP 2 841 631 B1**
(45) Date de publication et mention de la délivrance du brevet: **18.05.2016**
(21) Numéro de dépôt: 13722490.3
(22) Date de dépôt: 17.04.2013
(51) Int. Cl.: B29K 105/08, B29L 31/00, B29L 22/00, B29C 70/48, B29B 11/16, B29D 22/00, B29D 99/00, B29C 70/22, B29C 70/24, B29L 9/00, F01D 9/02, F01D 9/04, B29L 31/08, D03D 11/02, D03D 25/00, F01D 5/28

(54) **EBAUCHE FIBREUSE TISSEE EN UNE SEULE PIECE PAR TISSAGE TRIDIMENSIONNEL POUR LA REALISATION D'UNE PLATE-FORME A CAISSON FERME POUR SOUFFLANTE DE TURBOMACHINE EN MATERIAU COMPOSITE**
IN EINEM STÜCK DREIDIMENSIONAL GEWEBTER FASERZUSCHNITT ZUR HERSTELLUNG EINER PLATTFORM MIT EINER GESCHLOSSENEN KASTENSTRUKTUR FÜR EINEN TURBOMASCHINENLÜFTER AUS EINEM VERBUNDMATERIAL
FIBROUS BLANK WOVEN IN ONE PIECE BY THREE-DIMENSIONAL WEAVING FOR PRODUCING A PLATFORM WITH A CLOSED BOX STRUCTURE FOR A TURBOMACHINE FAN MADE OF COMPOSITE MATERIAL

(30) Priorité: 26.04.2012 FR 1253881
(43) Date de publication de la demande: 04.03.2015
(73) Titulaire: Snecma, 75015 Paris (FR)
(72) Inventeur: MARCHAL, Yann, F-77550 Moissy-Cramayel Cedex (FR); GIMAT, Matthieu, F-77550 Moissy-Cramayel Cedex (FR); COUPE, Dominique, Medford, Massachusetts 02155 (US); DAMBRINE, Bruno, 77550 Moissy-Cramayel Cedex (FR)
(74) Mandataire: Boura, Olivier
(86) Numéro de dépôt international: PCT/FR2013/050841
(87) Numéro de publication internationale: WO 2013/160584

(56) Documents cités:
- EP-A1- 0 391 745
- WO-A1-2011/080443
- FR-A1- 2 946 999
- US-A- 5 358 758

## Description

### Arrière-plan de l'invention

La présente invention se rapporte au domaine général de la réalisation d'une ébauche fibreuse tissée tridimensionnel (3D) pour la fabrication d'une plate-forme d'aube en matériau composite pour soufflante de turbomachine aéronautique.

Les plates-formes d'aube de soufflante de turbomachine, notamment de turboréacteur, sont disposées entre les aubes de la soufflante dans le prolongement du cône d'entrée de celle-ci. Elles permettent notamment de délimiter, du côté intérieur, la veine annulaire d'entrée d'air dans la soufflante, cette veine étant délimitée du côté extérieur par un carter.

Il est connu d'avoir recours aux matériaux composites pour la réalisation de différentes pièces d'une turbomachine aéronautique. Ainsi, une pièce en matériau composite peut être obtenue par réalisation d'une préforme fibreuse et densification de la préforme par une matrice. Selon l'application envisagée, la préforme peut être en fibres de verre, carbone ou céramique et la matrice peut être en un matériau organique (polymère), en carbone ou en céramique.

Pour des pièces de forme géométrique relativement complexe, il est également connu de réaliser une structure ou ébauche fibreuse en une seule pièce par tissage 3D ou multicouches et de mettre en forme la structure fibreuse pour obtenir une préforme fibreuse ayant une forme voisine de celle de la pièce à fabriquer.

La réalisation par tissage 3D d'une préforme fibreuse à section en forme de π pour plate-forme a ainsi déjà été proposée. Ces plates-formes présentent une section en forme de n avec une base et deux jambes formant raidisseurs qui s'étendent à partir d'une face de la base et servant à rigidifier la plate-forme de sorte à éviter tout déplacement de celle-ci sous l'effort centrifuge dû à la vitesse de rotation de la soufflante.

Avec de telles plates-formes, il a été constaté que la simple présence des raidisseurs n'offrait pas toujours une résistance suffisante à l'effort centrifuge. Aussi, il est apparu nécessaire d'ajouter une paroi entre les extrémités libres de ces raidisseurs pour former un caisson fermé sous la base de la plate-forme et en renforcer ainsi la résistance. Or, cette manipulation implique de réaliser sur la préforme de la plate-forme un recouvrement des raidisseurs qui est une opération difficile à gérer du fait de la taille des fibres mises en jeu. Par conséquent, cette opération peut facilement amener au rebut de la pièce.

Une ebauche fibreuse selon le préambule des revendications 1 et 8 est connue de US5358758A.

### Objet et résumé de l'invention

L'invention a donc pour but de fournir une ébauche fibreuse tissée en une seule pièce par tissage tridimensionnel pour la réalisation d'une plate-forme à caisson fermé pour soufflante de turbomachine en matériau composite.

Selon un premier aspect de l'invention, ce but est atteint grâce à une ébauche fibreuse tissée en une seule pièce par tissage tridimensionnel ayant des surfaces opposées et présentant :
une première partie, une deuxième partie et une troisième partie comprenant chacune une pluralité de couches de fils de trame et formant chacune une partie de l'épaisseur de l'ébauche fibreuse entre ses surfaces opposées, les fils de trame de l'ébauche fibreuse étant disposés en colonnes comprenant chacune des fils de trame des trois parties,
dans chaque plan de l'ébauche fibreuse, un ensemble de fils de chaîne liant entre elles les couches de fils de trame de la première partie, de la deuxième partie et de la troisième partie tout en ménageant :
   une déliaison fermée séparant la première partie de la deuxième partie sur une portion de la dimension de l'ébauche fibreuse en direction chaîne entre une limite amont et une limite aval de déliaison, et
   au moins une déliaison ouverte séparant la deuxième partie de la troisième partie sur une portion de la dimension de l'ébauche fibreuse en direction chaîne à partir d'une limite de déliaison jusqu'à un bord aval de l'ébauche fibreuse,
un ou plusieurs mêmes premiers fils de chaîne liant entre elles des couches de fils de trame de la première partie de l'ébauche fibreuse adjacentes à la déliaison fermée et des couches de fils de trame de la deuxième partie de l'ébauche fibreuse devant et au-delà de la déliaison fermée,
un ou plusieurs mêmes deuxièmes fils de chaîne liant entre elles des couches de fils de trame de la deuxième partie de l'ébauche fibreuse adjacentes à la déliaison ouverte et des couches de fils de trame de la première partie de l'ébauche fibreuse devant et au-delà de la déliaison fermée,
un ou plusieurs mêmes troisièmes fils de chaîne liant entre elles des couches de fils de trame de la deuxième partie de l'ébauche fibreuse adjacentes à la déliaison ouverte et des couches de fils de trame de la troisième partie de l'ébauche fibreuse devant la déliaison ouverte, et
un ou plusieurs mêmes quatrièmes fils de chaîne liant entre elles des couches de fils de trame de la troisième partie de l'ébauche fibreuse adjacentes à la déliaison ouverte et des couches de fils de trame de la deuxième partie de l'ébauche fibreuse devant la déliaison ouverte.

Un tel tissage 3D permet de réaliser une ébauche fibreuse en une seule pièce pour la fabrication d'une plate-forme munie d'un caisson fermé sous la base de la plate-forme servant à délimiter, du côté intérieur, la veine annulaire d'entrée d'air dans la soufflante.

Selon un mode de réalisation, l'ébauche fibreuse comprend en outre un ou plusieurs mêmes cinquièmes fils de chaîne liant entre elles des couches de fils de trame de la première partie de l'ébauche fibreuse devant la déliaison fermée et adjacentes à celle-ci et des couches de fils de trame de la deuxième partie de l'ébauche fibreuse au-delà de la déliaison fermée, et un ou plusieurs mêmes sixièmes fils de chaîne liant entre elles des couches de fils de trame de la deuxième partie de l'ébauche fibreuse devant la déliaison fermée et adjacentes à celle-ci et des couches de fils de trame de la première partie de l'ébauche fibreuse au-delà de la déliaison fermée.

Des trajets du ou des cinquièmes fils de chaîne et du ou des sixièmes fils de chaîne se croisent avantageusement dans au moins une zone de transition s'étendant dans l'ébauche fibreuse à partir de la limite aval de la déliaison fermée, la zone de transition s'étendant, en direction chaîne, sur une distance supérieure au pas entre colonnes de fils de trame voisines. Un tel croisement renforce la limite aval de la déliaison fermée et peut se traduire par une moindre sollicitation des fils lors du dépliage d'une partie de l'ébauche fibreuse adjacente à la déliaison fermée.

La limite de déliaison de la déliaison ouverte peut être située, dans la direction chaîne, entre les limites amont et aval de la déliaison fermée.

Selon un autre mode de réalisation, l'ébauche fibreuse comprend en outre une deuxième déliaison ouverte séparant la deuxième partie de la troisième partie sur une portion de la dimension de l'ébauche fibreuse en direction chaîne à partir d'un bord amont de l'ébauche fibreuse opposé au bord aval jusqu'à une limite de déliaison.

Le ou les troisièmes fils de chaîne peuvent lier entre elles des couches de fils de trame de la deuxième partie de l'ébauche fibreuse adjacentes aux déliaisons ouvertes et des couches de fils de trame de la troisième partie de l'ébauche fibreuse entre les déliaisons ouvertes, et le ou les quatrièmes fils de chaîne peuvent lier entre elles des couches de fils de trame de la troisième partie de l'ébauche fibreuse adjacentes aux déliaisons ouvertes et des couches de fils de trame de la deuxième partie de l'ébauche fibreuse entre les déliaisons ouvertes.

Les limites de déliaison des déliaisons ouvertes peuvent être situées, dans la direction chaîne, entre les limites amont et aval de la déliaison fermée.

Selon encore un autre mode de réalisation, l'ébauche fibreuse comprend en outre une double déliaison fermée séparant la deuxième partie de la troisième partie sur une portion de la dimension de l'ébauche fibreuse en direction chaîne entre les limites amont et aval de la déliaison fermée, ladite double déliaison fermée étant destinée à former un caisson de plate-forme à structure en nid d'abeille. Une telle structure en nid d'abeille permet de renforcer la résistance au flambage du caisson de la plate-forme tout en ayant une épaisseur maîtrisée.

Dans ce cas, un ou plusieurs mêmes sixièmes fils de chaîne peuvent lier entre elles des couches de fils de trame de la deuxième partie de l'ébauche fibreuse devant et au-delà la double déliaison fermée, et un ou plusieurs mêmes septièmes fils de chaîne peuvent lier entre elles des couches de fils de trame de la troisième partie de l'ébauche fibreuse devant et au-delà la double déliaison fermée, des trajets des sixièmes fils de chaînes et des septièmes fils de chaîne se croisant à trois reprises pour créer les deux déliaisons fermées.

De même, un ou plusieurs mêmes huitièmes fils de chaîne peuvent lier entre elles des couches de fils de trame de la deuxième partie de l'ébauche fibreuse devant la double déliaison fermée et des couches de fils de trame de la troisième partie de l'ébauche fibreuse au-delà de la double déliaison fermée, et un ou plusieurs mêmes neuvièmes fils de chaîne peuvent lier entre elles des couches de fils de trame de la troisième partie de l'ébauche fibreuse devant la double déliaison fermée et des couches de fils de trame de la deuxième partie de l'ébauche fibreuse au-delà de la double déliaison fermée, des trajets du ou des huitièmes fils de chaîne et du ou des neuvièmes fils de chaîne se croisant dans une zone centrale de la double déliaison fermée.

Quelque soit le mode de réalisation, les couches externes de fils de trame adjacentes aux surfaces opposées de l'ébauche fibreuse sont avantageusement tissées avec des mêmes fils de chaîne s'étendant continûment sur toute la dimension de l'ébauche fibreuse en direction chaîne, ce qui permet de préserver une continuité de fils en surface.

Selon un deuxième aspect de l'invention, le but visé est atteint grâce à une ébauche fibreuse telle que définie précédemment avec inversion entre chaîne et trame.

Selon un troisième aspect de l'invention, celle-ci vise un procédé de fabrication d'une préforme de plate-forme à caisson fermé pour soufflante de turbomachine en matériau composite comprenant la réalisation d'une préforme fibreuse par mise en forme d'une ébauche fibreuse telle que définie selon le premier aspect de l'invention, la mise en forme comportant le dépliage de portions de la première partie et de la deuxième partie de l'ébauche fibreuse adjacentes à la déliaison fermée et à la déliaison ouverte, la découpe des portions de la première partie et de la deuxième partie de l'ébauche fibreuse au-delà de la déliaison fermée, et la densification de la préforme par une matrice.

Selon un quatrième aspect de l'invention, celle-ci vise un procédé de fabrication d'une préforme de plate-forme à caisson fermé pour soufflante de turbomachine en matériau composite comprenant la réalisation d'une préforme fibreuse par mise en forme d'une ébauche fibreuse telle que définie selon le deuxième aspect de l'invention, la mise en forme comportant le dépliage de portions de la première partie et de la deuxième partie de l'ébauche fibreuse adjacentes à la déliaison fermée et à la première et deuxième déliaisons ouvertes, la découpe des portions de la première partie et de la deuxième partie de l'ébauche fibreuse avant et au-delà de la déliaison fermée, et la densification de la préforme par une matrice.

La mise en forme peut comprendre en outre la mise sous forme ondulée des portions de la deuxième partie et de la troisième partie de l'ébauche fibreuse qui sont situées entre les limites amont et de la déliaison fermée pour former des ondulations au niveau du caisson de la plate-forme. Un caisson muni d'ondulations présente une résistance au flambage améliorée tout en ayant une épaisseur maîtrisée.

Selon un cinquième aspect de l'invention, celle-ci vise une plate-forme à caisson fermé pour soufflante de turbomachine en matériau composite obtenue par le procédé selon le troisième ou quatrième aspect de l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'une plate-forme à caisson fermé pour soufflante de turbomachine en matériau composite ;
- la figure 2 est une vue schématique d'un plan d'une ébauche fibreuse tissée 3D selon un mode de réalisation de l'invention ;
- les figures 3A, 3B et 3C sont des loupes de la figure 2 ;
- les figures 4 à 6 montrent de façon très schématique en coupe comment l'ébauche fibreuse de la figure 2 est mise en forme pour obtenir une préforme de plate-forme à caisson ;
- les figures 7A, 7B et 7C sont des vues du plan de la préforme obtenue par mise en forme de l'ébauche fibreuse correspondant aux vues des figures 3A, 3B et 3C, respectivement ;
- la figure 8 est une vue schématique d'un plan d'une ébauche fibreuse tissée 3D selon un autre mode de réalisation de l'invention ;
- la figure 9 est une loupe de la figure 8 ;
- les figures 10 et 11 montrent de façon très schématique en coupe comment l'ébauche fibreuse de la figure 8 est mise en forme pour obtenir une préforme de plate-forme à caisson ;
- la figure 12 est une vue partielle du plan de la préforme obtenue par mise en forme de l'ébauche fibreuse de la figure 8 ;
- les figures 13 et 14 sont des vues en coupe transversale de préformes de plates-formes à caisson fermé selon des variantes de réalisation de l'invention ; et
- la figure 15 est une vue partielle d'un plan d'une ébauche fibreuse pour obtenir la préforme de plate-forme de la figure 14.

### Description détaillée de l'invention

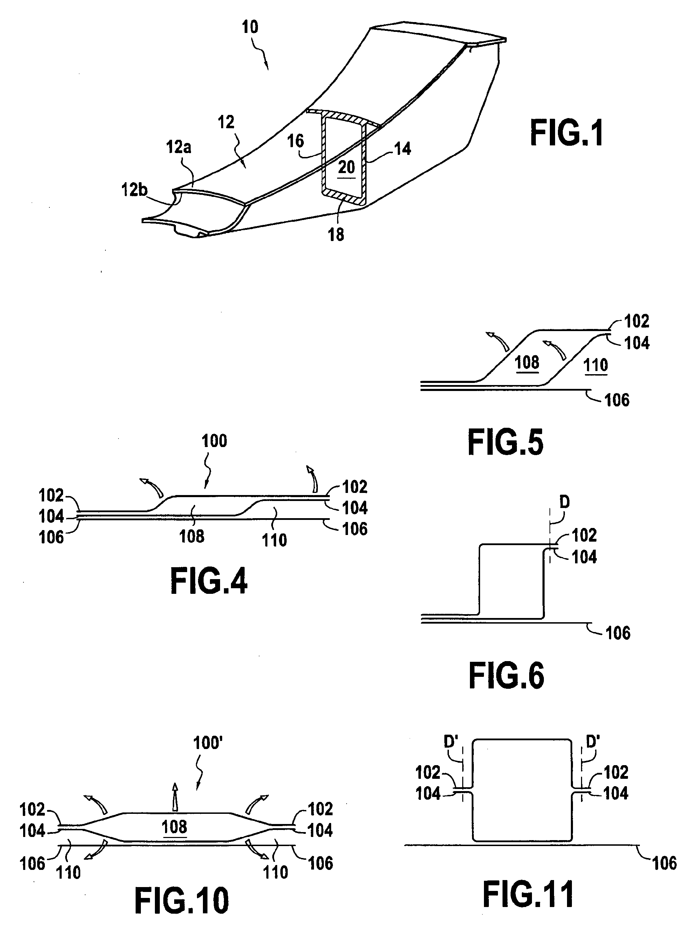

La figure 1 montre très schématiquement une plate-forme 10 à caisson fermé en matériau composite pour soufflante de turbomachine.

La plate-forme 10 comprend une base 12 ayant une face supérieure 12a et une face inférieure 12b, et deux jambes 14, 16 formant raidisseurs et s'étendant à partir de la face inférieure 12b. Au niveau de leur extrémité inférieure, les deux jambes 14, 16 sont reliées entre elles par une paroi de rigidification 18 de sorte à former un caisson fermé 20 sous la base 12 comme représenté en traits hachurés sur la figure 1.

La plate-forme 10 est destinée à être montée dans l'intervalle entre deux aubes de soufflante, au voisinage des pieds de celles-ci, afin de délimiter, du côté intérieur, une veine annulaire d'entrée d'air dans la soufflante, la veine étant délimitée du côté extérieur par un carter de soufflante.

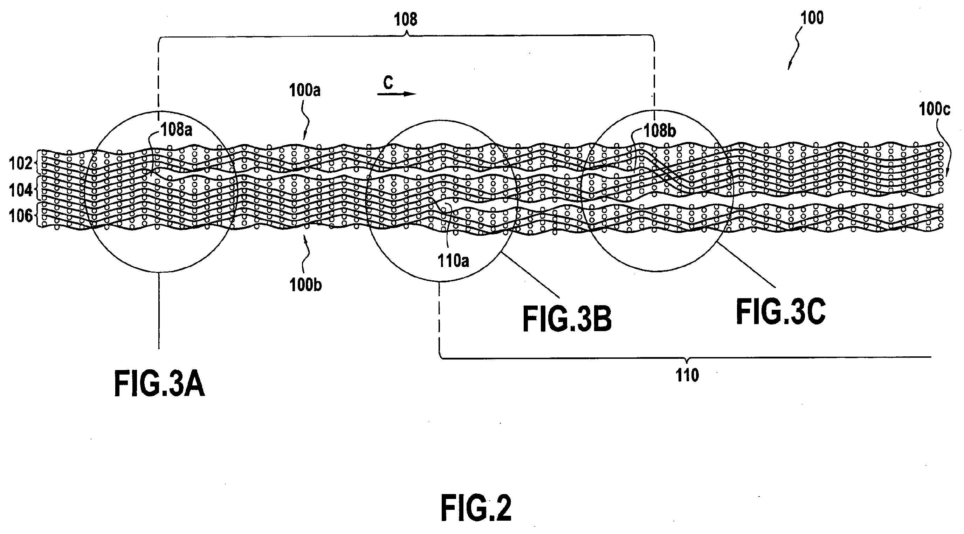

La figure 2 représente schématiquement un plan de chaîne d'une ébauche fibreuse 100 tissée 3D à partir de laquelle une préforme fibreuse de plate-forme peut être mise en forme, avant injection de résine ou densification par une matrice et usinage éventuel, afin d'obtenir une plate-forme de soufflante en matériau composite telle que celle illustrée par la figure 1.

Par tissage 3D, l'on comprendra que les fils de chaîne suivent des trajets sinueux afin de lier entre eux des fils de trame appartenant à des couches de fils de trame différentes, exception faite de déliaisons, étant noté qu'un tissage 3D, notamment à armure interlock, peut inclure des tissages 2D en surface. Différentes armures de tissage 3D peuvent être utilisées, telles que des armures interlock, multi-satin ou multi-voile, par exemple, comme décrit notamment dans le document WO 2006/136755.

Sur la figure 2, l'ébauche fibreuse 100 présente deux surfaces opposées 100a, 100b et comprend une première partie 102, une deuxième partie 104 et une troisième partie 106, la deuxième partie 104 étant positionnée entre les deux autres parties 102, 106. Ces trois parties forment respectivement une première, une deuxième et une troisième partie de l'épaisseur de l'ébauche fibreuse entre ses surfaces opposées 100a, 100b.

Chaque partie 102 à 106 de l'ébauche fibreuse comprend une pluralité de couches superposées de fils de trame, quatre dans l'exemple illustré, le nombre de fils de trame pouvant être tout nombre souhaité au moins égal à deux en fonction de l'épaisseur désirée. En outre, les nombres de couches de fils de trame dans les parties 102 à 106 pourront être différents les uns des autres. Les fils de trame sont disposés en colonnes comprenant chacune des fils de trame de la première, de la deuxième et de la troisième partie de l'ébauche fibreuse.

Sur une portion de la dimension de l'ébauche fibreuse 100 en direction chaîne (c), la première partie 102 et la deuxième partie 104 de l'ébauche fibreuse sont séparées totalement l'une de l'autre par une déliaison fermée 108 qui s'étend entre une limite amont 108a et une limite aval 108b de déliaison. Par déliaison fermée, on entend ici une zone fermée à ses deux extrémités qui n'est pas traversée par des fils de chaîne liant entre eux des fils de trame de couches appartenant respectivement à la première partie 102 et la deuxième partie 104 de l'ébauche fibreuse 100.

Sur une autre portion de la dimension de l'ébauche fibreuse 100 en direction chaîne, la deuxième partie 104 et la troisième partie 106 de l'ébauche fibreuse sont séparées totalement l'une de l'autre par une déliaison ouverte 110 qui s'étend à partir d'une limite de déliaison 110a jusqu'à un bord aval 100c de l'ébauche fibreuse. Par déliaison ouverte, on entend ici une zone fermée à une extrémité et ouverte à une extrémité opposée qui n'est pas traversée par des fils de chaîne liant entre eux des fils de trame de couches appartenant respectivement à la deuxième partie 104 et la troisième partie 106 de l'ébauche fibreuse 100.

Dans ce mode de réalisation, la limite de déliaison 110a de la déliaison ouverte 110 est située, dans la direction chaîne, entre les limites amont 108a et aval 108b de la déliaison fermée 108.

Hormis au niveau de la déliaison fermée 108 et de la déliaison ouverte 110, les couches de fils de trame sont liées entre elles par des fils de chaîne d'une pluralité de couches de fils de chaîne c₁₁ à c₂₂.

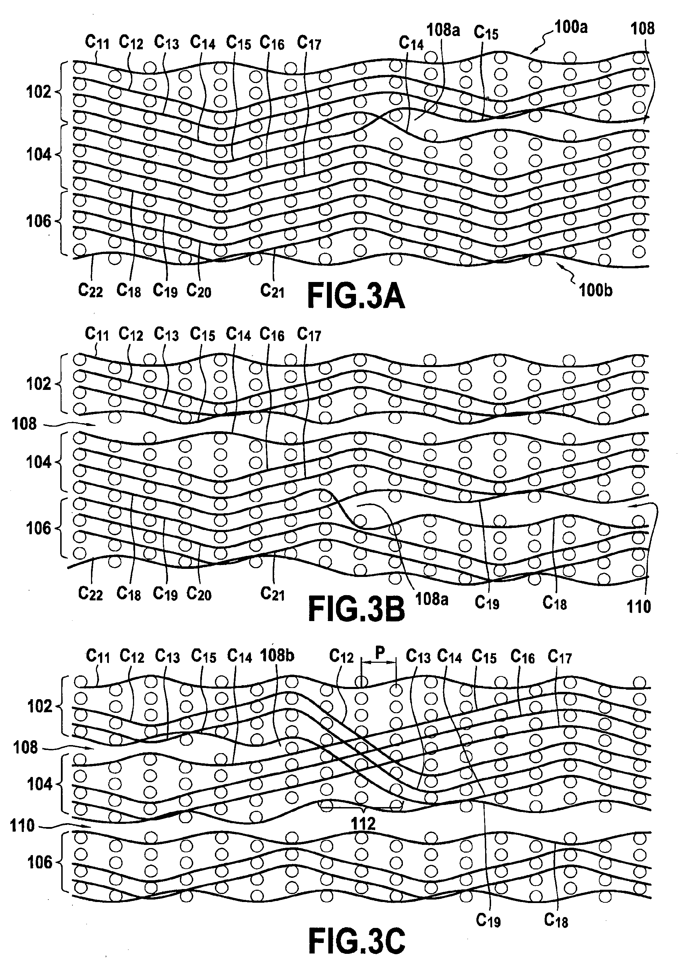

Dans l'exemple plus précisément illustré sur les figures 3A à 3C, un même premier fil de chaîne c₁₅ lie entre elles des couches de fils de trame de la première partie 102 de l'ébauche fibreuse adjacentes à la déliaison fermée 108 et des couches de fils de trame de la deuxième partie 104 de l'ébauche fibreuse devant et au-delà de la déliaison fermée, c'est-à-dire devant la limite amont 108a et au-delà la limite aval 108b de la déliaison fermée. Bien entendu, cette liaison pourrait être réalisée par plusieurs premiers fils de chaîne.

A l'inverse, un même deuxième fil de chaîne c₁₄ lie entre elles des couches de fils de trame de la deuxième partie 104 de l'ébauche fibreuse adjacentes à la déliaison ouverte 110 et des couches de fils de trame de la première partie 102 de l'ébauche fibreuse devant et au-delà de la déliaison fermée. Bien entendu, cette liaison pourrait être réalisée par plusieurs deuxièmes fils de chaîne.

Ainsi, le trajet du fil de chaîne c₁₅ et celui du fil de chaîne c₁₄ se croisent à la fois au niveau de la limite amont 108a de la déliaison fermée 108 et au niveau de la limite aval 108b de cette même déliaison fermée.

De la même façon, toujours dans l'exemple illustré sur les figures 3A à 3C, un même troisième fil de chaîne c₁₉ lie entre elles des couches de fils de trame de la deuxième partie 104 de l'ébauche fibreuse adjacentes à la déliaison ouverte 110 et des couches de fils de trame de la troisième partie 106 de l'ébauche fibreuse devant la déliaison ouverte, c'est-à-dire devant la limite de déliaison 110a de cette déliaison ouverte. Bien entendu, cette liaison pourrait être réalisée par plusieurs troisièmes fils de chaîne.

A l'inverse, un même quatrième fil de chaîne c₁₈ lie entre elles des couches de fils de trame de la troisième partie 106 de l'ébauche fibreuse adjacentes à la déliaison ouverte 110 et des couches de fils de trame de la deuxième partie 104 de l'ébauche fibreuse devant la déliaison ouverte. Bien entendu, cette liaison pourrait être réalisée par plusieurs quatrièmes fils de chaîne.

Ainsi, le trajet du fil de chaîne c₁₉ et celui du fil de chaîne c₁₈ se croisent au niveau de la limite de déliaison 110a de la déliaison ouverte 110.

Par ailleurs, des cinquièmes fils de chaîne c₁₂, c₁₃ lient entre elles des couches de fils de trame de la première partie 102 de l'ébauche fibreuse devant la déliaison fermée 108 et adjacentes à celle-ci et des couches de fils de trame de la deuxième partie 104 de l'ébauche fibreuse au-delà de la déliaison fermée.

De même, des sixièmes fils de chaîne c₁₆, c₁₇ lient entre elles des couches de fils de trame de la deuxième partie 104 de l'ébauche fibreuse devant la déliaison fermée 108 et adjacentes à celle-ci et des couches de fils de trame de la première partie 102 de l'ébauche fibreuse au-delà de la déliaison fermée.

Comme représenté sur la figure 3C, les trajets des cinquièmes fils de chaîne c₁₂, c₁₃ et des sixièmes fils de chaîne c₁₆, c₁₇ se croisent dans une zone de transition 112 s'étendant dans l'ébauche fibreuse à partir de la limite aval 110b de la déliaison fermée 110. Cette zone de transition 112 s'étendant, en direction chaîne, sur une distance supérieure à plus d'un pas p entre colonnes de fils de trame voisines, par exemple égale à 2p.

Un tel croisement entre les cinquièmes fils de chaîne c₁₂, c₁₃ et les sixièmes fils de chaîne c₁₆, c₁₇ renforce la limite aval 110b de la déliaison fermée 110 et peut se traduire par une moindre sollicitation des fils lors du dépliage d'une partie de l'ébauche fibreuse adjacente à cette déliaison fermée.

Les couches externes de fils de trame adjacentes aux surfaces opposées 100a et 100b de l'ébauche fibreuse 100 sont tissées avec des mêmes fils de chaîne, respectivement en et c₂₂, s'étendant continûment sur toute la dimension de l'ébauche fibreuse en direction chaîne. On pourra par exemple adopter un tissage satin de surface pour les fils de chaîne c₁₁ et c₂₂. De même, on pourra également adopter un tissage satin de surface pour les fils de chaîne c₁₄ et c₁₅ dans les portions de la première et de la deuxième parties de l'ébauche fibreuse séparées par la déliaison fermée 108, ainsi que pour les fils de chaîne c₁₈ et c₁₉ dans les portions de la deuxième et de la troisième parties de l'ébauche fibreuse séparées par la déliaison ouverte 110.

Une préforme fibreuse de plate-forme à caisson fermé (telle que celle illustrée par la figure 1) peut être obtenue à partir d'une telle ébauche fibreuse comme décrit ci-après.

L'ébauche fibreuse 100 présente après tissage une forme comme très schématiquement représenté sur la figure 4. Les portions de la première partie 102 et de la deuxième partie 104 de l'ébauche fibreuse adjacentes à la déliaison fermée 108 et à la déliaison ouverte 110 sont dépliées comme illustré par la figure 5, tandis que la troisième partie 106 de l'ébauche fibreuse n'est pas manipulée. La préforme finale obtenue à l'issu de ces dépliages est représentée sur la figure 6.

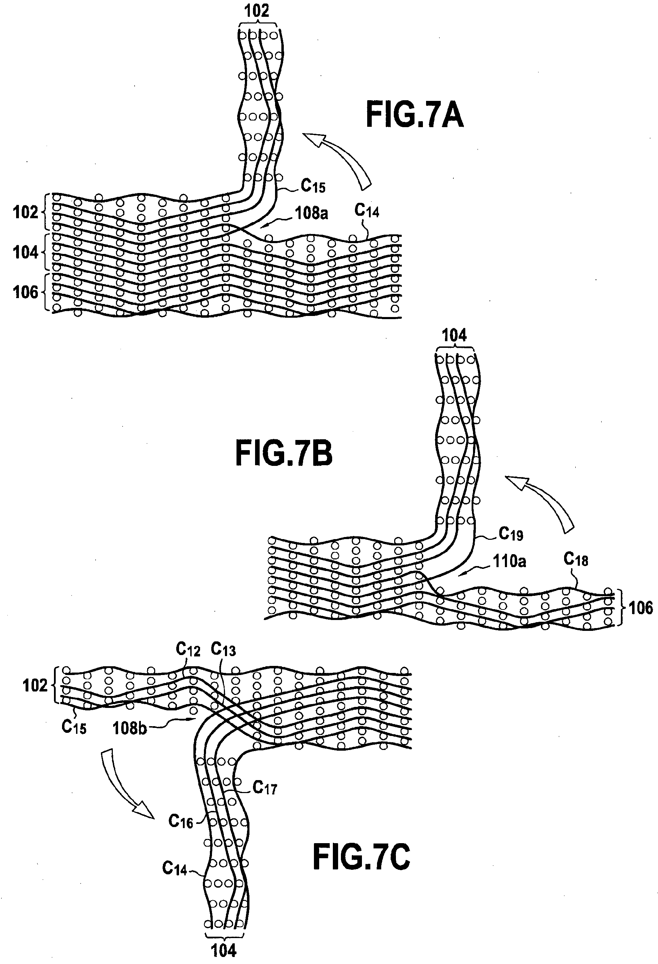

Le dépliage de ces portions d'ébauche fibreuse est plus précisément représenté par les figures 7A à 7C. Notamment, la figure 7A, correspondant à la loupe de la figure 3A, illustre comment est dépliée la portion de la première partie 102 de l'ébauche fibreuse qui est adjacente à la déliaison fermée. Ce dépliage est réalisé perpendiculairement à la portion de la deuxième partie de l'ébauche fibreuse adjacente à la déliaison fermée.

La figure 7B montre également le dépliage dans une zone de l'ébauche fibreuse correspondant à la loupe de la figure 3B. Ici, la portion de la deuxième partie 104 de l'ébauche fibreuse qui est adjacente à la déliaison ouverte est dépliée perpendiculairement à la portion de la troisième partie 106 de l'ébauche fibreuse adjacente à cette déliaison ouverte.

Enfin, la figure 7C représente le dépliage dans une zone de l'ébauche fibreuse correspondant à la loupe de la figure 3C, c'est-à-dire au niveau de la limite aval de déliaison 108b de la déliaison fermée. Dans cette zone, la portion de la deuxième partie 104 de l'ébauche fibreuse qui est adjacente à la déliaison fermée est dépliée perpendiculairement à la portion de la première partie 102 de l'ébauche fibreuse adjacente à cette déliaison fermée. Suite à ce dépliage, les portions de la première et de la deuxième partie de l'ébauche fibreuse qui sont situées au-delà de la déliaison fermée, c'est-à-dire au-delà de l'extrémité aval de déliaison 108b de celle-ci, seront découpées selon le plan de coupe D (voir également la figure 6).

La mise en forme de l'ébauche fibreuse 100 permet ainsi d'obtenir une préforme de plate-forme à caisson fermé telle que celle précédemment décrite en liaison avec la figure 1.

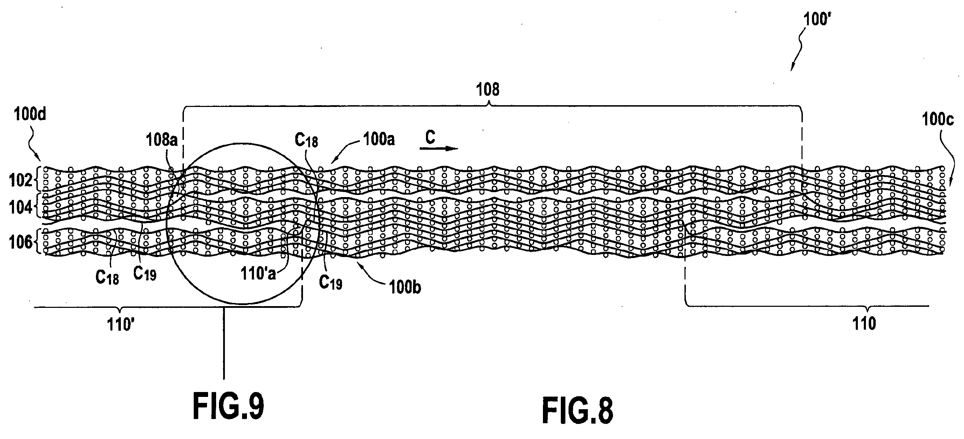

La figure 8 montre schématiquement un plan de chaîne d'une ébauche fibreuse 100' tissée 3D pour l'obtention d'une de plate-forme à caisson fermé selon un autre mode de réalisation de l'invention. Les éléments communs entre l'ébauche fibreuse 100' de la figure 8 et l'ébauche fibreuse 100 de la figure 2 portent les mêmes références et ne seront pas à nouveau décrits.

L'ébauche fibreuse 100' se distingue de celle de la figure 2 par la présence d'une deuxième déliaison ouverte 110' séparant la deuxième partie 104 de la troisième partie 106 sur une portion de la dimension de l'ébauche fibreuse en direction chaîne (c), cette deuxième déliaison ouverte 110' s'étendant à partir d'un bord amont 100d de l'ébauche fibreuse opposé au bord aval 100c jusqu'à une limite de déliaison 110'a.

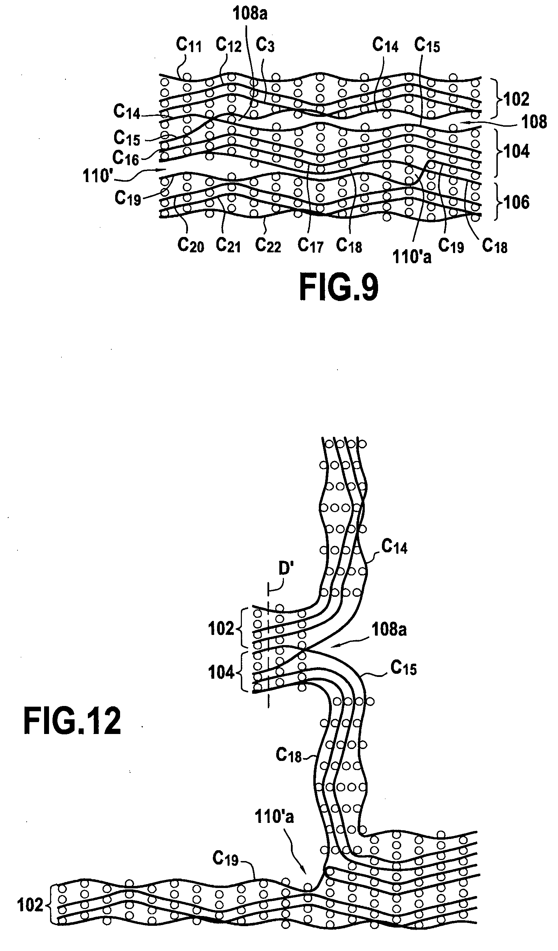

A cet effet, comme représenté plus précisément sur la figure 9, le même troisième fil de chaîne c₁₉ lie entre elles des couches de fils de trame de la deuxième partie 104 de l'ébauche fibreuse 100' adjacentes aux deux déliaisons ouvertes 110,110' et des couches de fils de trame de la troisième partie 106 de l'ébauche fibreuse entre ces déliaisons ouvertes, c'est-à-dire entre les limites de déliaison 110'a, 110a respectives de ces déliaisons ouvertes.

De même, le même quatrième fil de chaîne c₁₈ lie entre elles des couches de fils de trame de la troisième partie 106 de l'ébauche fibreuse 100' adjacentes aux deux déliaisons ouvertes 110,110' et des couches de fils de trame de la deuxième partie 104 de l'ébauche fibreuse entre ces déliaisons ouvertes.

Bien entendu, ces liaisons par le troisième et le quatrième fils de chaîne pourraient être réalisées par plusieurs troisièmes et quatrièmes fils de chaîne. Par ailleurs, on pourra adopter un tissage satin de surface pour les fils de chaîne c₁₈ et c₁₉ dans les portions de la deuxième et de la troisième parties de l'ébauche fibreuse séparées par les deux déliaisons ouvertes 110.

L'autre déliaison ouverte 110 séparant la deuxième partie 104 de la troisième partie 106 de l'ébauche fibreuse 100' est identique à celle décrite en liaison avec le mode de réalisation de la figure 2. Il en est de même de la déliaison fermée 108 entre la première partie 102 et la deuxième partie 104 de l'ébauche fibreuse.

En outre, les limites de déliaison 110a, 110'a des deux déliaisons ouvertes 110, 110' de l'ébauche fibreuse 100' sont situées, dans la direction chaîne, entre la limite amont 108a et la limite aval 108b de la déliaison fermée 108.

Une préforme fibreuse de plate-forme à caisson fermé (telle que celle illustrée par la figure 1) peut être obtenue à partir d'une telle ébauche fibreuse comme décrit ci-après.

L'ébauche fibreuse 100' présente, après tissage, une forme comme très schématiquement représenté sur la figure 10. Les portions de la première partie 102 et de la deuxième partie 104 de l'ébauche fibreuse adjacentes à la déliaison fermée 108 et aux deux déliaisons ouvertes 110, 110' sont dépliées comme illustré par la figure 11, tandis que la troisième partie 106 de l'ébauche fibreuse n'est pas manipulée.

Plus précisément, le dépliage des portions de la première partie 102 et de la deuxième partie 104 de l'ébauche fibreuse 100' qui sont adjacentes à la déliaison fermée 108 entraîne une ouverture à 180° de cette déliaison fermée au niveau de ses limites de déliaison (voir figure 11).

Ainsi, la figure 12 représente un tel dépliage dans une zone de l'ébauche fibreuse correspondant à la limite amont de déliaison 108a de la déliaison fermée. Dans cette zone, les portions de la première partie 102 et de la deuxième partie 104 de l'ébauche fibreuse qui sont adjacentes à la déliaison fermée sont dépliées de sorte à former entre elles un angle de 180° environ.

Suite à l'opération de dépliage de l'ébauche fibreuse, les portions de la première et de la deuxième partie de l'ébauche fibreuse 100' qui sont situées en avant et au-delà de la déliaison fermée 108, c'est-à-dire avant l'extrémité amont de déliaison 108a et au-delà de l'extrémité aval de déliaison 108b de celle-ci, seront découpées selon les plans de coupe D' (voir également la figure 11).

Dans les modes de réalisation décrits, on notera que la trame et chaîne pourront être substituées l'une à l'autre.

Par ailleurs, dans les modes de réalisation décrits, l'ébauche fibreuse 100, 100' est formée par tissage 3D avec des fils de nature choisie en fonction de l'application envisagée, par exemple des fils de verre, de carbone ou de céramique.

Le dépôt de la matrice dans la préforme fibreuse (obtenue par mise en forme de l'ébauche fibreuse) pour former une plate-forme à caisson fermé en matériau composite est réalisée en maintenant la préforme dans le moule au moins jusqu'à rigidification (ou consolidation) de la préforme. Préalablement à la mise dans le moule, un noyau est disposé à l'intérieur de la déliaison fermée de la préforme.

La matrice est de nature choisie en fonction de l'application envisagée, par exemple une matrice organique obtenue notamment à partir d'une résine précurseur de matrice polymère telle qu'une résine époxyde, bismaléimide ou polyimide, ou une matrice en carbone ou une matrice en céramique. Dans le cas d'une matrice organique, la préforme fibreuse est imprégnée par une composition contenant la résine précurseur de matrice, avant conformation dans un outillage, ou après conformation, l'imprégnation étant dans ce dernier cas réalisée par exemple par infusion ou par un processus de type RTM ("Resin Transfer Moulding"). Dans le cas d'une matrice en carbone ou en céramique, la densification pourra être réalisée par infiltration chimique en phase gazeuse, ou CVI ("Chemical Vapor Infiltration") ou par imprégnation par une composition liquide contenant une résine précurseur de carbone ou de céramique et traitement thermique de pyrolyse ou céramisation du précurseur, ces procédés étant bien connus en soi. L'usinage de la plate-forme à ses dimensions définitives est réalisé après injection/densification de la préforme fibreuse.

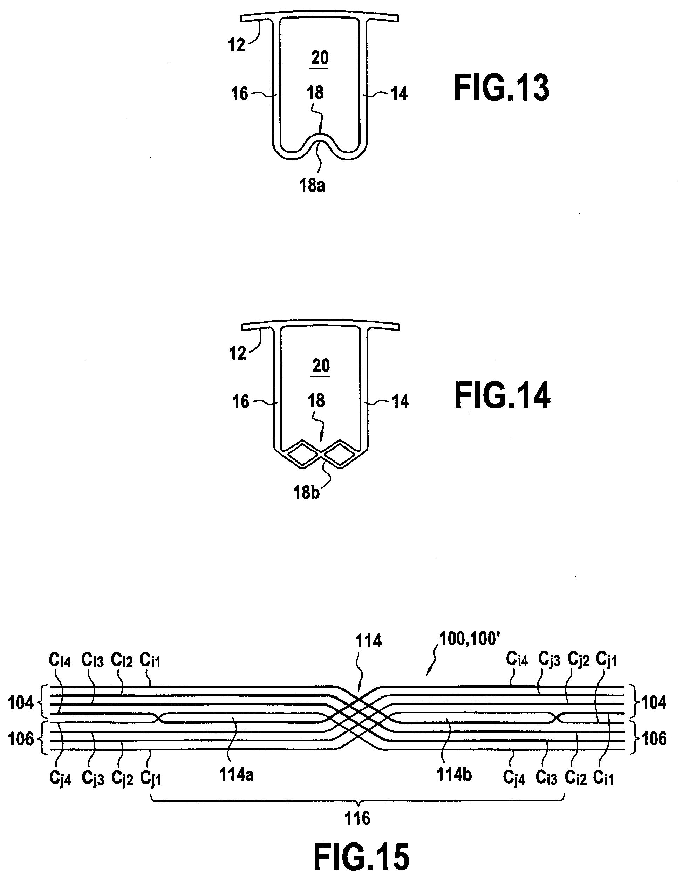

Les figures 13 et 14 illustrent des variantes de réalisation de préformes pour la réalisation de plates-formes à caisson fermé.

Dans ces variantes de réalisation, la paroi de rigidification 18 du caisson fermé sous la base 12 de la plate-forme présente une résistance accrue au flambage sans avoir à augmenter l'épaisseur de la paroi de rigidification. Ainsi, dans la variante de réalisation de la figure 13, la paroi de rigidification 18 présente des ondulations 18a. De même, dans la variante de réalisation de la figure 14, la paroi de rigidification 18 présente une structure 18b en nid d'abeille.

Ces structures 18a, 18b particulières permettent de renforcer la résistance du caisson de la plate-forme aux efforts de compression à laquelle la plate-forme est soumise.

La structure à ondulation 18a de la figure 13 est obtenue lors de l'étape de mise en forme de l'ébauche fibreuse réalisée comme décrit précédemment. En particulier, l'ébauche fibreuse peut être réalisée selon le mode de réalisation décrit en liaison avec les figures 2 et 3A à 3C ou selon le mode de réalisation décrit en liaison avec les figures 8 et 9.

Au cours de l'étape de mise en forme de l'ébauche fibreuse, les portions de la deuxième et de la troisième partie de l'ébauche fibreuse qui sont destinées à former préforme de paroi de rigidification (c'est-à-dire qui sont situées entre les limites amont et aval de la déliaison fermée de l'ébauche fibreuse) sont déformées à l'aide d'un outillage spécifique pour former des ondulations telles que celles représentées sur la figure 13. Le nombre et l'amplitude des ondulations créées peuvent varier selon le besoin mécanique.

La structure à nid d'abeille 18b de la figure 14 est obtenue par une variante de tissage de l'ébauche fibreuse obtenue selon l'un ou l'autre des deux modes de réalisation précédemment décrits.

En particulier, l'ébauche fibreuse 100, 100' partiellement représentée sur la figure 15 (sans fils de trame, par soucis de clarté) comprend en outre une double déliaison fermée 114 séparant la deuxième partie 104 de la troisième partie 106 sur une portion 116 de la dimension de l'ébauche fibreuse en direction chaîne. Cette portion 116 s'étend au plus entre les limites amont 108a et aval 108b de la déliaison fermée 108 représentée sur les figures 2 et 8.

Plus précisément, la portion 116 de l'ébauche fibreuse au niveau de laquelle la double déliaison fermée 114 est réalisée est située, dans le cas d'une ébauche fibreuse 100 selon le mode de réalisation de la figure 2, entre la limite amont 108a de la déliaison fermée et la limite de déliaison 110a de la déliaison ouverte 110, et dans le cas d'une ébauche fibreuse 100' selon le mode de réalisation de la figure 8, entre la limite de déliaison 110'a de la deuxième déliaison ouverte 110' et la limite de déliaison 110a de la déliaison ouverte 110.

Par ailleurs, la double déliaison fermée 114 séparant la deuxième partie 104 de la troisième partie 106 de l'ébauche fibreuse consiste en deux déliaisons fermées qui sont adjacentes l'une à l'autre, respectivement 114a et 114b.

De façon plus précise, un ou plusieurs mêmes sixièmes fils de chaîne cᵢ₁ et cᵢ₄ lient entre elles des couches de fils de trame de la deuxième partie 104 de l'ébauche fibreuse devant et au-delà la double déliaison fermée 114 et un ou plusieurs mêmes septièmes fils de chaîne cⱼ₁ et cⱼ₄ lient entre elles des couches de fils de trame de la troisième partie 106 de l'ébauche fibreuse devant et au-delà la double déliaison fermée. Les trajets des sixièmes fils de chaînes cᵢ₁, cᵢ₄ et des septièmes fils de chaîne cⱼ₁, cⱼ₄ se croisent à trois reprises pour créer les deux déliaisons fermées.

De plus, un ou plusieurs mêmes huitièmes fils de chaîne cᵢ₂ et cᵢ₃ lient entre elles des couches de fils de trame de la deuxième partie 104 de l'ébauche fibreuse devant la double déliaison fermée 114 et des couches de fils de trame de la troisième partie 106 de l'ébauche fibreuse au-delà de la double déliaison fermée.

De même, un ou plusieurs mêmes neuvièmes fils de chaîne cⱼ₂ et cⱼ₃ lient entre elles des couches de fils de trame de la troisième partie 106 de l'ébauche fibreuse devant la double déliaison fermée 114 et des couches de fils de trame de la deuxième partie 104 de l'ébauche fibreuse au-delà de la double déliaison fermée.

Les trajets du ou des huitièmes fils de chaîne cᵢ₂, cᵢ₃ et du ou des neuvièmes fils de chaîne cⱼ₂, cⱼ₃ se croisent dans une zone centrale de la double déliaison fermée 114, à savoir au niveau de la jonction entre les deux déliai sons fermées 114a, 114b.

On notera que dans le cas d'une ébauche fibreuse obtenue selon le mode de réalisation des figures 2 et 3A à 3C, les sixièmes fils de chaîne cᵢ₁, cᵢ₄ mentionnés ci-dessus correspondent respectivement aux fils de chaîne c₁₄ et c₁₈ mentionnés dans ce mode de réalisation, les septièmes fils de chaîne cⱼ₁, cⱼ₄ correspondent respectivement aux fils de chaîne c₁₉ et c₂₂, les huitièmes fils de chaîne cᵢ₂, cᵢ₃ correspondent respectivement aux fils de chaîne c₁₆ et c₁₇, et les neuvièmes fils de chaîne cⱼ₂, cⱼ₃ correspondent respectivement aux fils de chaîne c₂₀ et c₂₁.

De même, dans le cas d'une ébauche fibreuse obtenue selon le mode de réalisation des figures 8 et 9, les sixièmes fils de chaîne cᵢ₁, cᵢ₄ mentionnés ci-dessus correspondent respectivement aux fils de chaîne c₁₄ et c₁₉ mentionnés dans ce mode de réalisation, les septièmes fils de chaîne cⱼ₁, cⱼ₄ correspondent respectivement aux fils de chaîne c₁₈ et c₂₂, les huitièmes fils de chaîne cᵢ₂, cᵢ₃ correspondent respectivement aux fils de chaîne c₁₆ et c₁₇, et les neuvièmes fils de chaîne cⱼ₂, cⱼ₃ correspondent respectivement aux fils de chaîne c₂₀ et c₂₁.

On notera également que la trame et chaîne pourront être substituées l'une à l'autre.

La préforme de plate-forme à caisson fermé et muni d'une structure à nid d'abeille 18b telle que celle de la figure 14 est obtenue par mise en forme de l'ébauche fibreuse ainsi tissée. En particulier, les déliaisons fermées 114a, 114b de la double déliaison fermée 114 sont dépliées pour former deux alvéoles adjacentes. Le nombre et les dimensions des alvéoles peuvent varier en fonction du besoin mécanique.

## Revendications

1. Ebauche fibreuse (100 ; 100') tissée en une seule pièce par tissage tridimensionnel pour la réalisation d'une plate-forme à caisson fermé pour soufflante de turbomachine en matériau composite, l'ébauche fibreuse ayant des surfaces opposées (100a, 100b) et présentant :
une première partie (102), une deuxième partie (104) et une troisième partie (106) comprenant chacune une pluralité de couches de fils de trame et formant chacune une partie de l'épaisseur de l'ébauche fibreuse entre ses surfaces opposées, les fils de trame de l'ébauche fibreuse étant disposés en colonnes comprenant chacune des fils de trame des trois parties,
dans chaque plan de l'ébauche fibreuse, un ensemble de fils de chaîne (c₁₁ à c₂₂) liant entre elles les couches de fils de trame de la première partie, de la deuxième partie et de la troisième partie tout en ménageant :
une déliaison fermée (108) séparant la première partie (102) de la deuxième partie (104) sur une portion de la dimension de l'ébauche fibreuse en direction chaîne entre une limite amont (108a) et une limite aval (108b) de déliaison, et
au moins une déliaison ouverte (110) séparant la deuxième partie (104) de la troisième partie (106) sur une portion de la dimension de l'ébauche fibreuse en direction chaîne à partir d'une limite de déliaison (110a) jusqu'à un bord aval (100c) de l'ébauche fibreuse, **caractérisée par**
un ou plusieurs mêmes premiers fils de chaîne (c₁₅) liant entre elles des couches de fils de trame de la première partie de l'ébauche fibreuse adjacentes à la déliaison fermée (108) et des couches de fils de trame de la deuxième partie de l'ébauche fibreuse devant et au-delà de la déliaison fermée,
un ou plusieurs mêmes deuxièmes fils de chaîne (c₁₄) liant entre elles des couches de fils de trame de la deuxième partie de l'ébauche fibreuse adjacentes à la déliaison ouverte (110) et des couches de fils de trame de la première partie de l'ébauche fibreuse devant et au-delà de la déliaison fermée,
un ou plusieurs mêmes troisièmes fils de chaîne (c₁₉) liant entre elles des couches de fils de trame de la deuxième partie de l'ébauche fibreuse adjacentes à la déliaison ouverte (110) et des couches de fils de trame de la troisième partie de l'ébauche fibreuse devant la déliaison ouverte, et
un ou plusieurs mêmes quatrièmes fils de chaîne (c₁₈) liant entre elles des couches de fils de trame de la troisième partie de l'ébauche fibreuse adjacentes à la déliaison ouverte (110) et des couches de fils de trame de la deuxième partie de l'ébauche fibreuse devant la déliaison ouverte.

2. Ebauche fibreuse selon la revendication 1, comprenant en outre :
un ou plusieurs mêmes cinquièmes fils de chaîne (c₁₂, c₁₃) liant entre elles des couches de fils de trame de la première partie de l'ébauche fibreuse devant la déliaison fermée et adjacentes à celle-ci et des couches de fils de trame de la deuxième partie de l'ébauche fibreuse au-delà de la déliaison fermée, et
un ou plusieurs mêmes sixièmes fils de chaîne (c₁₆, c₁₇) liant entre elles des couches de fils de trame de la deuxième partie de l'ébauche fibreuse devant la déliaison fermée et adjacentes à celle-ci et des couches de fils de trame de la première partie de l'ébauche fibreuse au-delà de la déliaison fermée.

3. Ebauche fibreuse selon l'une quelconque des revendications 1 et 2, dans laquelle la limite de déliaison (110a) de la déliaison ouverte (110) est située, dans la direction chaîne, entre les limites amont (108a) et aval (108b) de la déliaison fermée (108).

4. Ebauche fibreuse (100') selon la revendication 1, comprenant en outre une deuxième déliaison ouverte (110') séparant la deuxième partie (104) de la troisième partie (106) sur une portion de la dimension de l'ébauche fibreuse en direction chaîne à partir d'un bord amont (100d) de l'ébauche fibreuse opposé au bord aval (100c) jusqu'à une limite de déliaison (110'a).

5. Ebauche fibreuse selon l'une quelconque des revendications 1 à 4, comprenant en outre une double déliaison fermée (114) séparant la deuxième partie (104) de la troisième partie (106) sur une portion (116) de la dimension de l'ébauche fibreuse en direction chaîne entre les limites amont (108a) et aval (108b) de la déliaison fermée (108), ladite double déliaison fermée étant destinée à former un caisson de plate-forme à structure en nid d'abeille (18b).

6. Ebauche fibreuse selon la revendication 5, dans laquelle :
un ou plusieurs mêmes huitièmes fils de chaîne (cᵢ₂, cᵢ₃) lient entre elles des couches de fils de trame de la deuxième partie (104) de l'ébauche fibreuse devant la double déliaison fermée (114) et des couches de fils de trame de la troisième partie (106) de l'ébauche fibreuse au-delà de la double déliaison fermée ; et
un ou plusieurs mêmes neuvièmes fils de chaîne (cⱼ₂, cⱼ₃) lient entre elles des couches de fils de trame de la troisième partie (106) de l'ébauche fibreuse devant la double déliaison fermée (114) et des couches de fils de trame de la deuxième partie (104) de l'ébauche fibreuse au-delà de la double déliaison fermée ;
des trajets du ou des huitièmes fils de chaîne (cᵢ₂, cᵢ₃) et du ou des neuvièmes fils de chaîne (cⱼ₂, cⱼ₃) se croisant dans une zone centrale de la double déliaison fermée (114).

7. Ebauche fibreuse selon l'une quelconque des revendications 1 à 6, dans laquelle les couches externes de fils de trame adjacentes aux surfaces opposées de l'ébauche fibreuse sont tissées avec des mêmes fils de chaîne (c₁₁, c₂₂) s'étendant continûment sur toute la dimension de l'ébauche fibreuse en direction chaîne.

8. Ebauche fibreuse tissée (100;100') en une seule pièce par tissage tridimensionnel pour la réalisation d'une plate-forme à caisson fermé pour soufflante de turbomachine en matériau composite, l'ébauche fibreuse ayant des surfaces opposées (100a,100b) et présentant :
une première partie (102), une deuxième partiel (104) et une troisième partie (106) comprenant chacune une pluralité de couches de fils de chaîne et formant chacune une partie de l'épaisseur de l'ébauche fibreuse entre ses surfaces opposées, les fils de chaîne de la structure fibreuse étant disposés en colonnes comprenant chacune des fils de chaîne des trois parties,
dans chaque plan de l'ébauche, un ensemble de fils de trame liant entre elles les couches de fils de chaîne (c₁₁ à c₂₂) de la première partie, de la deuxième partie et de la troisième partie tout en ménageant :
une déliaison fermée (108) séparant la première partie (102) de la deuxième partie (104) sur une portion de la dimension de l'ébauche fibreuse en direction trame entre une limite amont (108a) et une limite aval (108b) de déliaison, et
au moins une déliaison ouverte (110) séparant la deuxième partie (104) de la troisième partie (106) sur une portion de la dimension de l'ébauche fibreuse en direction trame à partir d'une limite de déliaison (110a) jusqu'à un bord (100c) de l'ébauche fibreuse, **caractérisée par**
un ou plusieurs mêmes premiers fils de trame liant entre elles des couches de fils de chaîne (c₁₁-c₂₂) de première partie de l'ébauche fibreuse adjacentes à la déliaison fermée (108) et des couches de fils de chaîne de la deuxième partie de l'ébauche fibreuse devant et au-delà de la déliaison fermée,
un ou plusieurs mêmes deuxièmes fils de trame liant entre elles des couches de fils de chaîne de la deuxième partie de l'ébauche fibreuse adjacentes à la déliaison ouvertes (110) et des couches de fils de chaîne de la première partie de l'ébauche fibreuse devant et au-delà de la déliaison fermée, et
un ou plusieurs mêmes troisièmes fils de trame liant entre elles des couches de fils de chaîne de la deuxième partie de l'ébauche fibreuse adjacentes à la déliaison ouverte (110) et des couches de fils de chaîne de la troisième partie de l'ébauche fibreuse devant la déliaison ouverte, et
un ou plusieurs mêmes quatrièmes fils de trame liant entre elles des couches de fils de chaîne de troisième partie de l'ébauche fibreuse adjacentes à la déliaison ouverte (110) et des couches de fils de chaîne de la deuxième partie de l'ébauche fibreuse devant la déliaison ouverte.

9. Ebauche fibreuse selon la revendication 8, comprenant en outre une deuxième déliaison ouverte séparant la deuxième partie de la troisième partie sur une portion de la dimension de l'ébauche fibreuse en direction trame à partir d'un bord amont de l'ébauche fibreuse opposé au bord aval jusqu'à une limite de déliaison.

10. Ebauche fibreuse selon l'une quelconque des revendications 8 et 9, comprenant en outre une double déliaison fermée séparant la deuxième partie de la troisième partie sur une portion de la dimension de l'ébauche fibreuse en direction trame entre les limites amont et aval de la déliaison fermée, ladite double déliaison fermée étant destinée à former un caisson de ptate-forme à structure en nid d'abeille.

11. Ebauche fibreuse selon l'une quelconque des revendications 8 à 10, dans laquelle les couches externes de fils de chaîne adjacentes aux surfaces opposées de l'ébauche fibreuse sont tissées avec des mêmes fils de trame s'étendant continûment sur toute la dimension de l'ébauche fibreuse en direction trame.

12. Procédé de fabrication d'une préforme de plate-forme à caisson fermé pour soufflante de turbomachine en matériau composite comprenant :
la réalisation d'une préforme fibreuse par mise en forme d'une ébauche fibreuse (100) selon l'une quelconque des revendications 1 à 3 ou selon l'une quelconque des revendications 7 et 8, la mise en forme comportant le dépliage de portions de la première partie (102) et de la deuxième partie (104) de l'ébauche fibreuse adjacentes à la déliaison fermée (108) et à la déliaison ouverte (110),
la découpe des portions de la première partie et de la deuxième partie de l'ébauche fibreuse au-delà de la déliaison fermée, et
la densification de la préforme par une matrice.

13. Procédé de fabrication d'une préforme de plate-forme à caisson fermé pour soufflante de turbomachine en matériau composite comprenant :
la réalisation d'une préforme fibreuse par mise en forme d'une ébauche fibreuse (100') selon la revendication 4 ou selon la revendication 9, la mise en forme comportant le dépliage de portions de la première partie (102) et de la deuxième partie (104) de l'ébauche fibreuse adjacentes à la déliaison fermée (108) et à la première et deuxième déliaisons ouvertes (110, 110'),
la découpe des portions de la première partie et de la deuxième partie de l'ébauche fibreuse avant et au-delà de la déliaison fermée, et
la densification de la préforme par une matrice.

14. Procédé de fabrication selon l'une des revendications 12 et 13, dans lequel la mise en forme comprend en outre la mise sous forme ondulée des portions de la deuxième partie (102) et de la troisième partie (103) de l'ébauche fibreuse qui sont situées entre les limites amont (108a) et aval (108b) de la déliaison fermée (108) pour former des ondulations au niveau du caisson de la plate-forme.

15. Plate-forme (10) à caisson fermé pour soufflante de turbomachine en matériau composite obtenue par le procédé selon l'une quelconque des revendications 12 à 14.

## Patentansprüche

1. Durch dreidimensionales Weben einstückig gewebter Faserrohling (100; 100') für die Herstellung einer Plattform mit geschlossenem Kasten für ein Turbomaschinengebläse aus Verbundwerkstoff, wobei der Faserrohling entgegengesetzte Oberflächen (100a, 100b) hat und aufweist:
einen ersten Teil (102), einen zweiten Teil (104) und einen dritten Teil (106), die jeweils eine Vielzahl von Schussfadenlagen umfassen und jeweils einen Teil der Dicke des Faserrohlings zwischen seinen entgegengesetzten Oberflächen bilden, wobei die Schussfäden des Faserrohlings in Spalten, welche jeweils Schussfäden der drei Teile umfassen, angeordnet sind,
in jeder Ebene des Faserrohlings eine Anordnung von Kettfäden (c₁₁ bis c₂₂), weiche die Schussfadenlagen des ersten Teils, des zweiten Teils und des dritten Teils untereinander verbinden und dabei aussparen:
eine geschlossene Losbindung (108), die den ersten Teil (102) von dem zweiten Teil (104) über einen Abschnitt der Abmessung des Faserrohlings in Kettrichtung zwischen einer vorgelagerten Grenze (108a) und einer nachgelagerten Grenze (108b) der Losbindung trennt, und
wenigstens eine offene Losbindung (110), die den zweiten Teil (104) von dem dritten Teil (106) über einen Abschnitt der Abmessung des Faserrohlings in Kettrichtung ab einer Losbindungsgrenze (110a) bis zu einem nachgelagerten Rand (100c) des Faserrohlings trennt,
**gekennzeichnet durch**
einen oder mehrere gleiche erste Kettfäden (c₁₅), die Schussfadenlagen des ersten Teils des Faserrohlings, welche zu der geschlossenen Losbindung (108) benachbart sind, und Schussfadenlagen des zweiten Teils des Faserrohlings vor und jenseits der geschlossenen Losbindung untereinander verbinden,
einen oder mehrere gleiche zweite Kettfäden (c₁₄), die Schussfadenlagen des zweiten Teils des Faserrohlings, welche zu der offenen Losbindung (110) benachbart sind, und Schussfadenlagen des ersten Teils des Faserrohlings vor und jenseits der geschlossenen Losbindung untereinander verbinden,
einen oder mehrere gleiche dritte Kettfäden (c₁₉), die Schussfadenlagen des zweiten Teils des Faserrohlings, welche zu der offenen Losbindung (110) benachbart sind, und Schussfadenlagen des dritten Teils des Faserrohlings vor der offenen Losbindung untereinander verbinden, sowie
einen oder mehrere gleiche vierte Kettfäden (c₁₈), die Schussfadenlagen des dritten Teils des Faserrohlings, welche zu der offenen Losbindung (110) benachbart sind, und Schussfadenlagen des zweiten Teils des Faserrohlings vor der offenen Losbindung untereinander verbinden.

2. Faserrohling nach Anspruch 1, ferner umfassend:
einen oder mehrere gleiche fünfte Kettfäden (c₁₂, c₁₃), die Schussfadenlagen des ersten Teils des Faserrohlings vor der geschlossenen Losbindung und benachbart zu dieser sowie Schussfadenlagen des zweiten Teils des Faserrohlings jenseits der geschlossenen Losbindung untereinander verbinden, und
einen oder mehrere gleiche sechste Kettfäden (c₁₆, c₁₇), die Schussfadenlagen des zweiten Teils des Faserrohlings vor der geschlossenen Losbindung und benachbart zu dieser sowie Schussfadenlagen des ersten Teils des Faserrohlings jenseits der geschlossenen Losbindung untereinander verbinden.

3. Faserrohling nach einem der Ansprüche 1 und 2, wobei die Losbindungsgrenze (110a) der offenen Losbindung (110) in der Kettrichtung zwischen der vorgelagerten (108a) und der nachgelagerten (108b) Grenze der geschlossenen Losbindung (108) gelegen ist.

4. Faserrohling (100') nach Anspruch 1, ferner umfassend eine zweite offene Losbindung (110'), welche den zweiten Teil (104) von dem dritten Teil (106) über einen Abschnitt der Abmessung des Faserrohlings in Kettrichtung ab einem zu dem nachgelagerten Rand (100c) entgegengesetzten vorgelagerten Rand (100d) des Faserrohlings bis zu einer Losbindungsgrenze (110'a) trennt.

5. Faserrohling nach einem der Ansprüche 1 bis 4, ferner umfassend eine zweifache geschlossene Losbindung (114), welche den zweiten Teil (104) von dem dritten Teil (106) über einen Abschnitt (116) der Abmessung des Faserrohlings in Kettrichtung zwischen der vorgelagerten (108a) und der nachgelagerten (108b) Grenze der geschlossenen Losbindung (108) trennt, wobei die zweifache geschlossene Losbindung dazu bestimmt ist, einen Plattformkasten mit Bienenwabenstruktur (18b) zu bilden.

6. Faserrohling nach Anspruch 5, wobei:
ein oder mehrere gleiche achte Kettfäden (cᵢ₂, cᵢ₃) Schussfadenlagen des zweiten Teils (104) des Faserrohlings vor der zweifachen geschlossenen Losbindung (114) und Schussfadenlagen des dritten Teils (106) des Faserrohlings jenseits der zweifachen geschlossenen Losbindung untereinander verbinden, und
ein oder mehrere gleiche neunte Kettfäden (cⱼ₂, cⱼ₃) Schussfadenlagen des dritten Teils (106) des Faserrohlings vor der zweifachen geschlossenen Losbindung (114) und Schussfadenlagen des zweiten Teils (104) des Faserrohlings jenseits der zweifachen geschlossenen Losbindung untereinander verbinden,
wobei sich Wege des oder der achten Kettfäden (cᵢ₂, cᵢ₃) und des oder der neunten Kettfäden (cⱼ₂, cⱼ₃) in einem mittleren Bereich der zweifachen geschlossenen Losbindung (114) kreuzen.

7. Faserrohling nach einem der Ansprüche 1 bis 6, wobei die äußeren Schussfadenlagen, welche zu den entgegengesetzten Oberflächen des Faserrohlings benachbart sind, mit gleichen Kettfäden (c₁₁, c₂₂), welche sich über die gesamte Abmessung des Faserrohlings in Kettrichtung durchgehend erstrecken, gewebt sind.

8. Durch dreidimensionales Weben einstückig gewebter Faserrohling (100; 100') für die Herstellung einer Plattform mit geschlossenem Kasten für ein Turbomaschinengebläse aus Verbundwerkstoff, wobei der Faserrohling entgegengesetzte Oberflächen (100a, 100b) hat und aufweist:
einen ersten Teil (102), einen zweiten Teil (104) und einen dritten Teil (106), die jeweils eine Vielzahl von Kettfadenlagen umfassen und jeweils einen Teil der Dicke des Faserrohlings zwischen seinen entgegengesetzten Oberflächen bilden, wobei die Kettfäden der Faserstruktur in Spalten, welche jeweils Kettfäden der drei Teile umfassen, angeordnet sind,
in jeder Ebene des Rohlings eine Anordnung von Schussfäden, welche die Kettfadenlagen (c₁₁ bis c₂₂) des ersten Teils, des zweiten Teils und des dritten Teils untereinander verbinden und dabei aussparen:
eine geschlossene Losbindung (108), die den ersten Teil (102) von dem zweiten Teil (104) über einen Abschnitt der Abmessung des Faserrohlings in Schussrichtung zwischen einer vorgelagerten Grenze (108a) und einer nachgelagerten Grenze (108b) der Losbindung trennt, und
wenigstens eine offene Losbindung (110), die den zweiten Teil (104) von dem dritten Teil (106) über einen Abschnitt der Abmessung des Faserrohlings in Schussrichtung ab einer Losbindungsgrenze (110a) bis zu einem Rand (100c) des Faserrohlings trennt,
**gekennzeichnet durch**
einen oder mehrere gleiche erste Schussfäden, die Kettfadenlagen (c₁₁ - c₂₂) des ersten Teils des Faserrohlings, welche zu der geschlossenen Losbindung (108) benachbart sind, und Kettfadenlagen des zweiten Teils des Faserrohlings vor und jenseits der geschlossenen Losbindung untereinander verbinden,
einen oder mehrere gleiche zweite Schussfäden, die Kettfadenlagen des zweiten Teils des Faserrohlings, welche zu der offenen Losbindung (110) benachbart sind, und Kettfadenlagen des ersten Teils des Faserrohlings vor und jenseits der geschlossenen Losbindung untereinander verbinden, und
einen oder mehrere gleiche dritte Schussfäden, die Kettfadenlagen des zweiten Teils des Faserrohlings, welche zu der offenen Losbindung (110) benachbart sind, und Kettfadenlagen des dritten Teils des Faserrohlings vor der offenen Losbindung untereinander verbinden, und
einen oder mehrere gleiche vierte Schussfäden, die Kettfadenlagen des dritten Teils des Faserrohlings, welche zu der offenen Losbindung (110) benachbart sind, und Kettfadenlagen des zweiten Teils des Faserrohlings vor der offenen Losbindung untereinander verbinden.

9. Faserrohling nach Anspruch 8, ferner umfassend eine zweite offene Losbindung, welche den zweiten Teil von dem dritten Teil über einen Abschnitt der Abmessung des Faserrohlings in Schussrichtung ab einem zu dem nachgelagerten Rand entgegengesetzten vorgelagerten Rand des Faserrohlings bis zu einer Losbindungsgrenze trennt.

10. Faserrohling nach einem der Ansprüche 8 und 9, ferner umfassend eine zweifache geschlossene Losbindung, welche den zweiten Teil von dem dritten Teil über einen Abschnitt der Abmessung des Faserrohlings in Schussrichtung zwischen der vorgelagerten und der nachgelagerten Grenze der geschlossenen Losbindung trennt, wobei die zweifache geschlossene Losbindung dazu bestimmt ist, einen Plattformkasten mit Bienenwabenstruktur zu bilden.

11. Faserrohling nach einem der Ansprüche 8 bis 10, wobei die äußeren Kettfadenlagen, welche zu den entgegengesetzten Oberflächen des Faserrohlings benachbart sind, mit gleichen Schussfäden, welche sich über die gesamte Abmessung des Faserrohlings in Schussrichtung durchgehend erstrecken, gewebt sind.

12. Verfahren zur Herstellung eines Vorformlings einer Plattform mit geschlossenem Kasten für ein Turbomaschinengebläse aus Verbundwerkstoff, umfassend:
das Ausbilden eines Faservorformlings durch Informbringen eines Faserrohlings (100) nach einem der Ansprüche 1 bis 3 oder nach einem der Ansprüche 7 und 8, wobei das Informbringen das Aufklappen von Abschnitten des ersten Teils (102) und des zweiten Teils (104) des Faserrohlings, welche zu der geschlossenen Losbindung (108) und zu der offenen Losbindung (110) benachbart sind, umfasst,
das Schneiden der Abschnitte des ersten Teils und des zweiten Teils des Faserrohlings jenseits der geschlossenen Losbindung sowie
das Verdichten des Vorformlings durch eine Matrix.

13. Verfahren zur Herstellung eines Vorformlings einer Plattform mit geschlossenem Kasten für ein Turbomaschinengebläse aus Verbundwerkstoff, umfassend:
das Ausbilden eines Faservorformlings durch Informbringen eines Faserrohlings (100') nach Anspruch 4 oder nach Anspruch 9, wobei das Informbringen das Aufklappen von Abschnitten des ersten Teils (102) und des zweiten Teils (104) des Faserrohlings, welche zu der geschlossenen Losbindung (108) und zu der ersten und der zweiten offenen Losbindung (110,110') benachbart sind, umfasst,
das Schneiden der Abschnitte des ersten Teils und des zweiten Teils des Faserrohlings vor und jenseits der geschlossenen Losbindung sowie
das Verdichten des Vorformlings durch eine Matrix.

14. Herstellungsverfahren nach einem der Ansprüche 12 und 13, wobei das Informbringen ferner umfasst, die Abschnitte des zweiten Teils (104) und des dritten Teils (106) des Faserrohlings, die zwischen der vorgelagerten (108a) und der nachgelagerten (108b) Grenze der geschlossenen Losbindung (108) gelegen sind, in Wellenform zu bringen, um im Bereich des Kastens der Plattform Wellen auszubilden.

15. Plattform (10) mit geschlossenem Kasten für ein Turbomaschinengebläse aus Verbundwerkstoff, die durch das Verfahren nach einem der Ansprüche 12 bis 14 erhalten wird.

## Claims

1. A fiber blank (100; 100') woven as a single piece by three-dimensional weaving for making a platform of closed box structure out of composite material for a turbine engine fan, the fiber blank having opposite surfaces (100a, 100b) and presenting:
a first portion (102), a second portion (104), and a third portion (106), each comprising a plurality of layers of weft yarns and each forming a portion of the thickness of the fiber blank between its opposite surfaces, the weft yarns of the fiber blank being arranged in columns, each column having weft yarns in all three portions;
in each plane of the fiber blank, a set of warp yarns (c₁₁ to c₂₂) interlinking the layers of weft yarns of the first portion, of the second portion, and of the third portion, while forming:
a closed non-interlinked zone (108) separating the first portion (102) from the second portion (104) over a fraction of the dimension of the fiber blank in the warp direction between an upstream non-interlinking limit (108a) and a downstream non-interlinking limit (108b); and
at least one open non-interlinked zone (110) separating the second portion (104) from the third portion (106) over a fraction of the dimension of the fiber blank in the warp direction from a non-interlinking limit (110a) to a downstream edge (100c) of the fiber blank; **characterized by**:
one or more first warp yarns (c₁₅) interlinking layers of weft yarns in the first portion of the fiber blank adjacent to the closed non-interlinked zone (108), and layers of weft yarns in the second portion of the fiber blank before and after the closed non-interlinked zone;
one or more second warp yarns (c₁₄) interlinking layers of weft yarns in the second portion of the fiber blank adjacent to the open non-interlinked zone (110), and layers of weft yarns in the first portion of the fiber blank before and after the closed non-interlinked zone;
one or more third warp yarns (c₁₉) interlinking layers of weft yarns in the second portion of the fiber blank adjacent to the open non-interlinked zone (110), and layers of weft yarns in the third portion of the fiber blank before the open non-interlinked zone; and
one or more fourth warp yarns (c₁₈) interlinking layers of weft yarns in the third portion of the fiber blank adjacent to the open non-interlinked zone (110), and layers of weft yarns in the second portion of the fiber blank before the open non-interlinked zone.

2. A fiber blank according to claim 1, further comprising:
one or more fifth warp yarns (c₁₂, c₁₃) interlinking layers of weft yarns in the first portion of the fiber blank before the closed non-interlinked zone and adjacent thereto, and layers of weft yarns in the second portion of the fiber blank after the closed non-interlinked zone; and
one or more sixth warp yarns (c₁₆, c₁₇) interlinking layers of weft yarns in the second portion of the fiber blank before the closed non-interlinked zone and adjacent thereto, and layers of weft yarns in the first portion of the fiber blank after the closed non-interlinked zone.

3. A fiber blank according to any one of claims 1 and 2, wherein the non-interlinking limit (110a) of the open non-interlinked zone (110) is situated in the warp direction between the upstream and downstream limits (108a, 108b) of the closed non-interlinked zone (108).

4. A fiber blank (100') according to claim 1, further including a second open non-interlinked zone (110') separating the second portion (104) from the third portion (106) over a fraction of the dimension of the fiber blank in the warp direction from an upstream edge (100d) of the fiber blank opposite from the downstream edge (100c), up to a non-interlinking limit (110'a).

5. A fiber blank according to any one of claims 1 to 4, further including two closed non-interlinked zones (114) separating the second portion (104) from the third portion (106) over a fraction (116) of the dimension of the fiber blank in the warp direction between the upstream and downstream limits (108a, 108b) of the closed non-interlinked zone (108), said two closed non-interlinked zones being for forming a platform box structure with a honeycomb arrangement (18b).

6. A fiber blank according to claim 5, wherein:
one or more eighth warp yarns (cᵢ₂, cᵢ₃) interlink layers of weft yarns in the second portion (104) of the fiber blank before the two closed non-interlinked zones (114), and layers of weft yarns in the third portion (106) of the fiber blank after the two closed non-interlinked zones; and
one or more ninth warp yarns (cⱼ₂, cⱼ₃) interlink layers of weft yarns in the third portion (106) of the fiber blank before the two closed non-interlinked zones (114), and layers of weft yarns in the second portion (104) of the fiber blank after the two closed non-interlinked zones;
the paths of the eighth warp yarn(s) (cᵢ₂, cᵢ₃) and of the ninth warp yarn(s) (cⱼ₂, cⱼ₃) crossing in a middle region of the two closed non-interlinked zones (114).

7. A fiber blank according to any one of claims 1 to 6, wherein the outer layers of weft yarns adjacent to the opposite surfaces of the fiber blank are woven with the same warp yarns (c₁₁, c₂₂) extending continuously over the entire dimension of the fiber blank in the warp direction.

8. A fiber blank woven (100; 100') as a single piece by three-dimensional weaving for making a platform of closed box structure out of composite material for a turbine engine fan, the fiber blank having opposite surfaces (100a, 100b) and presenting:
a first portion (102), a second portion (104), and a third portion (106), each comprising a plurality of layers of warp yarns and each forming a portion of the thickness of the fiber blank between its opposite surfaces, the warp yarns of the fiber structure being arranged in columns, each column having warp yarns in all three portions;
in each plane of the blank, a set of weft yarns interlinking the layers of warp yarns (c₁₁, c₂₂) of the first portion, of the second portion, and of the third portion, while forming:
a closed non-interlinked zone (108) separating the first portion (102) from the second portion (104) over a fraction of the dimension of the fiber blank in the weft direction between an upstream non-interlinking limit (108a) and a downstream non-interlinking limit (108b); and
at least one open non-interlinked zone (110) separating the second portion (104) from the third portion (106) over a fraction of the dimension of the fiber blank in the weft direction from a non-interlinking limit (110a) to an edge (110c) of the fiber blank; **characterized by**:
one or more first weft yarns interlinking layers of warp yarns (c₁₁, c₂₂) in the first portion of the fiber blank adjacent to the closed non-interlinked zone (108), and layers of warp yarns in the second portion of the fiber blank before and after the closed non-interlinked zone;
one or more second weft yarns interlinking layers of warp yarns in the second portion of the fiber blank adjacent to the open non-interlinked zone (110), and layers of warp yarns in the first portion of the fiber blank before and after the closed non-interlinked zone;
one or more third weft yarns interlinking layers of warp yarns in the second portion of the fiber blank adjacent to the open non-interlinked zone (110), and layers of warp yarns in the third portion of the fiber blank before the open non-interlinked zone; and
one or more fourth weft yarns interlinking layers of warp yarns in the third portion of the fiber blank adjacent to the open non-interlinked zone (110), and layers of warp yarns in the second portion of the fiber blank before the open non-interlinked zone.

9. A fiber blank according to claim 8, further including a second open non-interlinked zone separating the second portion from the third portion over a fraction of the dimension of the fiber blank in the weft direction from an upstream edge of the fiber blank opposite from the downstream edge, up to a non-interlinking limit.

10. A fiber blank according to any one of claims 8 and 9, further including two closed non-interlinked zones separating the second portion from the third portion over a fraction of the dimension of the fiber blank in the weft direction between the upstream and downstream limits of the closed non-interlinked zone, said two closed non-interlinked zones being for forming a platform box structure with a honeycomb arrangement.

11. A fiber blank according to any one of claims 8 to 10, wherein the outer layers of warp yarns adjacent to the opposite surfaces of the fiber blank are woven with the same weft yarns extending continuously over the entire dimension of the fiber blank in the weft direction.

12. A method of fabricating a preform for a closed box-structure platform out of composite material for a turbine engine fan, the method comprising:
making a fiber preform by shaping a fiber blank (100) according to any one of claims 1 to 3 or according to any one of claims 7 and 8, the shaping comprising unfolding fractions of the first portion (102) and of the second portion (104) of the fiber blank that are adjacent to the closed non-interlinked zone (108) and to the open non-interlinked zone (110);
cutting off the fractions of the first and second portions of the fiber blank after the closed non-interlinked zone; and
densifying the preform with a matrix.

13. A method of fabricating a preform for a closed box-structure platform out of composite material for a turbine engine fan, the method comprising:
making a fiber preform by shaping a fiber blank (100') according to claim 4 or according to claim 9, the shaping comprising unfolding fractions of the first portion (102) and of the second portion (104) of the fiber blank that are adjacent to the closed non-interlinked zone (108) and to the first and second open non-interlinked zones (110, 110');
cutting off the fractions of the first and second portions of the fiber blank before and after the closed non-interlinked zone; and
densifying the preform with a matrix.

14. A method according to claim 12 or claim 13, wherein the shaping further comprises shaping fractions of the second and third portions (104, 106) of the fiber blank that are situated between the upstream and downstream limits (108a, 108b) of the closed non-interlinked zone (108) to form undulations in the box structure of the platform.

15. A closed box-structure platform (10) made out of composite material for a turbine engine fan, the platform being obtained by the method according to any one of claims 12 to 14.
